# EUROPÄISCHE PATENTSCHRIFT

(11) **EP 0 562 535 B1**
(45) Veröffentlichungstag und Bekanntmachung des Hinweises auf die Patenterteilung: **17.12.1997**
(21) Anmeldenummer: 93104712.0
(22) Anmeldetag: 23.03.1993
(51) Int. Cl.: G01B 5/00, G01B 7/00

(54) **Präzisions-Kupplung zum Einsatz in einem Tastkopf einer Messeinrichtung**
Precision coupler for using in a sensing head of a measuring device
Coupleur de précision pour l'emploi dans un palpeur d'un dispositif de mesure

(30) Priorität: 26.03.1992 DE 4209829
(43) Veröffentlichungstag der Anmeldung: 29.09.1993
(73) Patentinhaber: ASKEA Feinmechanik GmbH, D-88279 Amtzell (DE)
(72) Erfinder: Hobe, Max, D-88255 Baindt (DE)
(74) Vertreter: Weiss, Peter, Dr. rer.nat.

(56) Entgegenhaltungen:
- EP-A- 0 471 168
- DE-A- 2 365 984
- DE-A- 3 422 103

## Beschreibung

Die vorliegende Erfindung betrifft eine Präzisions-Kupplung beispielsweise zum Einsatz in einem Tastkopf einer Meßeinrichtung, bei der ein Taststift über ein Adapterteil lösbar mit einem Anschlußzapfen verbunden ist, das Adapterteil einen Tragkörper aufweist, welcher einen Innenraum zur Aufnahme eines Adapterelementes ausbildet, der Tragkörper mit dem Anschlußzapfen und das Adapterelement mit dem Taststift verbunden ist, wobei der Innenraum von einer Ringwand umfangen ist, in welcher eine Lagefixierung zum Festlegen des Adapterelements vorgesehen ist, die als zumindest eine Kugel ausgebildet ist, welche in einem Aufnahmeloch in der Ringwand lagert, und wobei das Adapterelement eine Zentriereinrichtung aufweist.

Eine solche Präzisions-Kupplung kann beispielsweise in Meßeinrichtungen Anwendung finden, die einen relativ zu einem zu vermessenden Werkstück bewegbaren Tastkopf aufweisen. Bei einem Meßvorgang wird der Tastkopf zu dem Werkstück hin bewegt, bis der Taststift das Werkstück berührt und aus einer selbstbestimmten Position ausgelenkt wird. Im Tastkopf wird dann ein Signal erzeugt, das an eine entsprechende Meßeinrichtung weitergegeben wird. Wird das Werkstück von mehreren Seiten her mit dem Taststift angefahren, so kann hierdurch die Ausgestaltung des Werkstückes erfaßt werden.

Ein derartiger Tastkopf ist beispielsweise in der DE - PS 28 01 656 beschrieben. Als weiteres Beispiel wird auf die DE - PS 27 57 453 und die DE - PS 27 42 817 verwiesen. In allen Fällen ist der Taststift direkt in den Anschlußzapfen eingeschraubt, so daß zu einem Austauschen des Taststiftes dieser Anschlußzapfen mit einer geeigneten Methode fixiert und mit einem geeigneten Werkzeug die Schraubverbindung gelöst wird. Hierdurch ist der Austausch gegen einen anderen Taststift kompliziert und aufwendig. Ferner kann sich die Verschraubung im Laufe des Gebrauchs des Taststiftes lösen, wodurch Meßungenauigkeiten an der Tagesordnung sind.

Eine ähnliche Tastanordnung ist auch aus der DE-A 34 22 103 bekannt. Dort umfaßt eine Tastsondenanordnung zur Werkstückprüfung in Bearbeitungszentren eine Tastsonde und einen Adapter, der in eine Werkzeugaufnahme einsetzbar ist. Die Tastsonde hat ein Sondengehäuse, das mit dem Adapter über einen Vorsprung verbunden ist, der zum Adapter hin divergiert und durch Querschrauben im Adapter zentriert und durch deren Einwirkung auf die divergierende Fläche des Vorsprunges zum Adapter hin gezogen werden kann.

Wesentlich bei derartigen Tastknöpfen ist ferner, daß beim Austausch ein neuer Taststift zentriert werden muß. Dies gilt vor allem, wenn der Taststift nicht nur an seinem unteren Ende eine Tastkugel aufweist, sondern noch mit weiteren Bezugspositionen belegt ist.

Ein o.g. Tastkopf ist aus der EP-A 0 471 168 bekannt. Dort ist ein Taststift in eine Bohrung an der Unterseite eines im wesentlichen scheibenförmigen Anschlußkörpers eingeschraubt, der an einer topfförmigen Aufnahmevorrichtung anliegt, die wiederum am Tastkopf befestigt ist. Um bei der Aufnahmevorrichtung in Anlage befindlichem Anschlußkörper, dessen Lage genau festlegen zu können, weist die Aufnahmevorrichtung an ihrem unteren äußeren Rand drei Zylinderkörper auf, die mit drei Kugelpaaren zusammenwirken, die auf der Oberseite des Anschlußkörpers liegen. Außerdem ist die Aufnahmevorrichtung mit einem zusätzlichen Kennstift versehen, der mit einer Ausnehmung am Anschlußkörper korrespondiert und so dessen Lage zusätzlich definiert.

Der vorliegenden Erfindung liegt die Aufgabe zugrunde, eine Präzisions-Kupplung der o.g. Art zu schaffen, bei welcher der Taststift auf einfache Art und Weise ausgetauscht und einfach aber sehr genau zentriert wird.

Zur Lösung dieser Aufgabe führt, daß die Ringwand von einem Verschlußelement umfangen ist, welches mit einer Wirkfläche die Kugel in das Aufnahmeloch in der Ringwand drückt und gegen die Kraft eines Vorspannelements verschiebbar an dem Adapterelement angeordnet ist.

Somit besteht die Präzisions-Kupplung lediglich aus wenigen Teilen, die leicht lösbar aneinander gekoppelt sind. Ferner geschieht die Festlegung des Taststiftes an dem Tragkörper auf eine Weise, daß der Taststift mit nur einer Hand eingesetzt bzw. von dem Tragkörper gelöst werden kann. Dies geschieht durch Kugeln in der Ringwand des Tragkörpers, welche mit dem Einsatzelement des Adapterelementes zusammenwirken. Die Kugeln lagern in der Ringwand so, daß sie zwar in die lichte Weite des Innenraumes des Tragkörpers eingreifen, aber nicht in diesen Innenraum hineinfallen. Nach außen können sie durch eine entsprechende Prägung ihres Aufnahmeloches gesichert sein. Bevorzugt wird jedoch ein O-Ring verwendet, welcher um die Ringwand gespannt ist und zum Teil in die lichte Weite der Aufnahmelöcher für die Kugeln eingreift. Damit jedoch die Kugeln überhaupt in die Löcher eingesetzt werden können, muß der Durchmesser des Aufnahmeloches zur Außenkontur der Ringwand hin größer sein als der Kugeldurchmesser. Dagegen ist der Durchmesser des Aufnahmeloches zum Innenraum des Tragkörpers hin geringer als der Durchmesser der Kugel und auch deshalb geringer als der Durchmesser des Aufnahmeloches zur Außenkontur der Ringwand hin.

In Gebrauchslage untergreifen die Kugeln eine Wirkfläche an dem Einsatzelement und pressen dieses in den Innenraum des Tragkörpers bzw. gegen einen Muldengrund des Innenraumes. Diese Wirkungsweise der Kugeln wird durch das Verschlußelement unterstützt, welches eine weitere Wirkfläche aufweist. Das Verschlußelement wird auf die Ringwand aufgeschoben, so daß seine Wirkfläche die Kugeln von außen her angreift und diese in die lichte Weite des Innenraumes eindrückt. Dabei untergreifen die Kugeln die Wirkfläche des Einsatzelementes des Adapterelementes.

Beide Wirkflächen können als schulterartige Absätze ausgebildet sein, wobei die Kugeln von den entsprechend ausgebildeten Kanten angegriffen werden. Die Kante der Wirkfläche des Verschlußelementes streift an den Kugeln vorbei und drückt diese in den Innenraum. Die Kante der Wirkfläche des Einsatzelementes gleitet über die Kugeln, wobei es aber genügt, wenn sich nur die Kante an den Kugeln abstützt. Die Kugeln sollten hierbei nicht zu weit unter das Einsatzelement greifen, damit ein leichteres Lösen möglich bleibt.

Bevorzugt sind beide Wirkflächen als Schrägflächen bzw. als Innenschrägfläche ausgebildet, wodurch das Lösen und Festlegen im Zusammenwirken mit den Kugeln verbessert ist.

Die Tätigkeit der Verschlußelement, welches ähnlich einer Hülse mit Innenschrägfläche zur Kraftübersetzung ausgebildet, wird durch das Vorspannelement unterstützt, welches das Verschlußelement gegen die Kugeln drückt. Bevorzugt befindet sich dieses Vorspannelement eingesetzt in einer Innenringnut in dem Verschlußelement und ist ferner einem Hülsenabschnitt aufgeschoben, der einen Teil des Adapterelementes bildet. Auf dies Art und Weise ist das Verschlußelement über das Vorspannelement mit dem Adapterelement verbunden.

In das Vorspannelement sind Linien durch Stanzen, Laserschneiden, Ätzen od.dgl. so eingeformt, daß bei Tätigkeit des Vorspannelementes weder sein Aussen- noch sein Innendurchmesser verändert wird. Hierdurch wird seine Halterung an dem Verschlußelement bzw. an dem Adapterelement gewährleistet.

Wesentlich ist die Anordnung der Schrägfläche des Einsatzelementes zu der Innenschrägfläche des Verschlußelements. Die Innenschrägfläche des Verschlußelements ist unterhalb der Schrägfläche des Einsatzelementes vorgesehen. Wird deshalb das Einsatzelement in den Innenraum des Tragkörpers eingeschoben, so drückt es die Kugeln zuerst nach außen, da diese noch nicht von der Innenschrägfläche des Verschlußelements beaufschlagt werden. Sobald die Kugeln die Schrägflächen des Einsatzelementes untergreifen, trifft von außen her die Innenschrägfläche des Verschlußelements auf die Kugeln und drückt diese unter die Schrägflächen.

Beim Lösen des Adapterelementes aus dem Tragkörper braucht lediglich das Verschlußelement gegen das Vorspannelement nach unten geschoben zu werden, so daß der Druck auf die Kugeln in der Ringwand nachläßt. Diese können dann entlang der Schrägfläche des Einsatzelementes laufen, bis sie das Einsatzelement freigeben.

Bevorzugt ist das Einsatzelement dreiecksförmig ausgebildet, wobei es dann auch in einem entsprechenden dreiecksförmigen Aufnahmeraum in dem Innenraum des Tragkörpers sitzt. Die Kugeln sind etwa in den Ecken des Dreiecks in der Ringwand angeordnet.

Des weiteren soll das Adapterelement das Zentrierelement aufweisen, welches mit beispielsweise Kugeln in dem Innenraum des Tragkörpers zusammenwirkt. Dabei soll jedoch im Rahmen der Erfindung auch liegen, daß das Einsatzelement selbst als Zentrierelement ausgebildet ist, wobei beispielsweise auf der Oberfläche des Einsatzelementes Zentriermulden für Kugeln im Muldengrund vorhanden sein können. Als günstiger hat sich aber eine Trennung der Funktion von Einsatzelement und Zentrierelement erwiesen.

Im vorliegenden Ausführungsbeispiel ist auch das Zentrierelement in etwa dreiecksförmig ausgebildet und befindet sich unterhalb des Einsatzelementes, ist aber um etwa 60° gegenüber diesem gedreht. Hierdurch befinden sich Zentriermulden für die Kugeln auf Überständen. Aus diesem Grunde sind die entsprechenden Kugeln in dem Innenraum des Tragkörpers auch auf Podesten angeordnet, die sich wiederum zwischen den Kugeln in der Ringwand befinden.

Bevorzugt ist das gesamte Adapterelement aus Einsatzelement, Zentrierelement, Hülsenabschnitt und gegebenenfalls einem Zwischenring einstückig ausgebildet und hergestellt. Es besitzt eine Gewindebohrung oder eine andere sonst gängige Aufnahmemöglichkeit für den Taststift.

Diese Ausgestaltung bewirkt, daß sowohl zum Lösen als auch zum Festlegen des Taststiftes lediglich zwei Finger notwendig sind und daß ferner die Zentrierung des Taststiftes gegenüber dem festliegenden Tragkörper selbsttätig erfolgt.

Ferner ist auch ein automatisches Lösen und Einsetzen des Taststiftes möglich. Beispielsweise kann das Verschlußelement Nuten oder Vorsprünge aufweisen, in welche oder unter welche eine Gabel eines Magazins greift. Wird dann der ganze Tastkopf angehoben, so ist das Verschlußelement fixiert, so daß der Taststift gelöst wird. Beim Einsetzen braucht lediglich das Adapterelement in den Tragkörper gedrückt zu werden. Hier sind selbstverständlich auch aufwendigere Möglichkeiten denkbar.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Fig. 1 eine Explosionsdarstellung einer erfindungsgemäßen Präzisions-Kupplung für einen nicht näher gezeigten Tastkopf einer Meßeinrichtung;
Fig. 2 einen vergrößert dargestellten Querschnitt durch einen Adapterteil der Präzisions-Kupplung gem. Fig. 1;
Fig. 3 eine Innenansicht eines Tragkörpers des Adapterteils gem. Fig. 2;

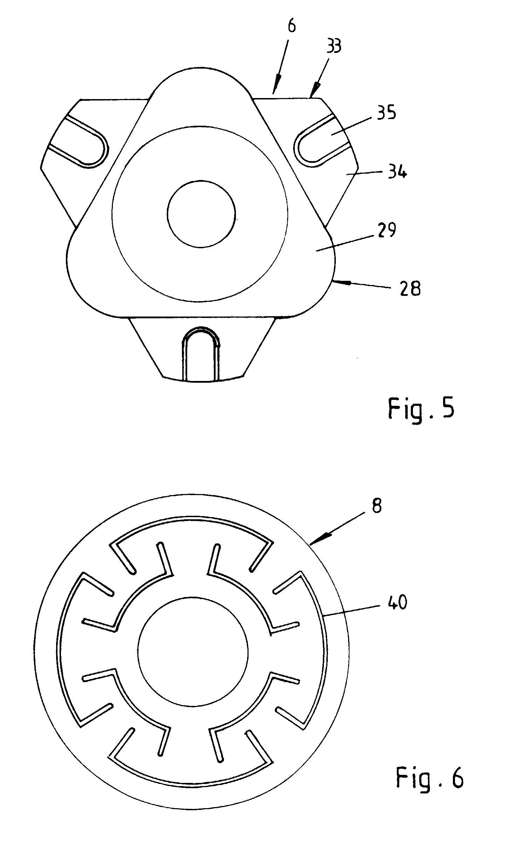

Fig. 4 eine Seitenansicht des Tragkörpers gem. Fig. 3;
Fig. 5 eine Draufsicht auf ein Adapterelement zur Verwendung in dem Adapterteil gem. Fig. 2;
Fig. 6 eine Draufsicht auf eine erfindungsgemäße Scheibenfeder zur Verwendung in dem Adapterteil gem. Fig. 2.

Eine erfindungsgemäße Präzisions-Kupplung R weist einen Anschlußzapfen 1 an einem nicht näher gezeigten Tastkopf für eine Meßeinrichtung auf. Auf den Anschlußzapfen 1 folgt ein Adapterteil 2, welches sich aus mehreren einzelnen Elementen zusammensetzt. An dieses Adapterteil 2 schließt ein Taststift 3 an, dem eine geeignete Tastkugel 4 angesetzt ist.

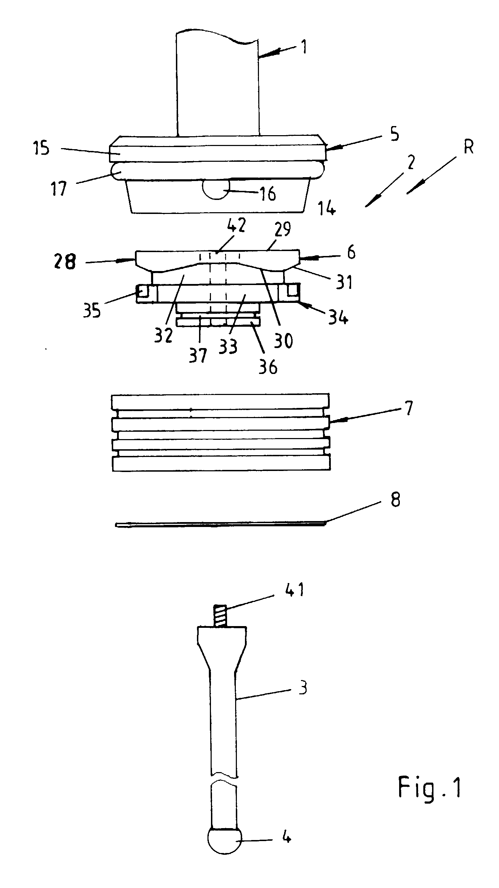

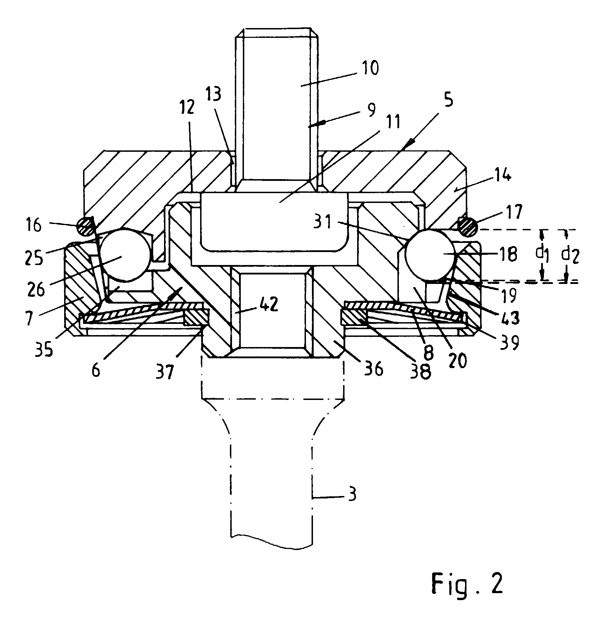

Die Elemente des Adapterteiles 2 sind ein Tragkörper 5, ein Adapterelement 6, ein Verschlußelement 7 sowie ein im vorliegenden Ausführungsbeispiel als Scheibenfeder ausgebildetes Vorspannelement 8. Während in Fig. 1 dieses Adapterteil 2 in Explosionsdarstellung gezeigt ist, kann gem. Fig. 2 das Zusammenwirken der einzelnen Teile erklärt werden. Der Tragkörper 5 ist mittels einer Schraube 9 mit dem Anschlußzapfen 1 verbunden, wobei ein Gewindebolzen 10 in eine entsprechende Gewindebohrung in dem Anschlußzapfen 1 eingreift, während ein Schraubenkopf 11 von innen her einen Muldengrund 12 des Tragkörpers 5 anschlägt. Dabei durchsetzt der Gewindebolzen 10 eine Bohrung 13 in dem Tragkörper 5.

Der Muldengrund 12 wird von einer Ringwand 14 umfangen, welche, wie in Fig. 1 gezeigt, eine konische Außenkontur aufweist. An diese Ringwand 14 schließt zum Anschlußzapfen 1 hin ein Flansch 15 an, wobei unterhalb des Flansches 15 in die Ringwand 14 noch eine Ringmulde 16 zur Aufnahme eines O-Ringes 17 eingearbeitet ist. Dieser O-Ring hat neben einer gewissen Dichtfunktion auch die Wirkung, daß er ein Herausfallen von als Kugeln ausgebildeten Lagefixierungen 18 verhindert, welche in Aufnahmelöchern 19 in der Ringwand 14 sitzen. Diese Aufnahmelöcher 19 sind so geformt, daß die Kugeln 18 nicht in einen von der Ringwand 14 und dem Muldengrund 12 gebildeten Innenraum 20 fallen können, da ein Durchmesser d1 des Aufnahmeloches 19 zum Innenraum 20 hin kleiner ist als ein Durchmesser d2 zur Außenkontur der Ringwand 14 hin. Ein Herausfallen der Kugel 18 aus dem Aufnahmeloch 19 kann nicht nur durch den O-Ring 17 vermieden werden, sondern beispielsweise könnte auch eine Außenkante des Aufnahmeloches 19 eine Prägung nach dem Einsetzen der Kugel 18 aufweisen.

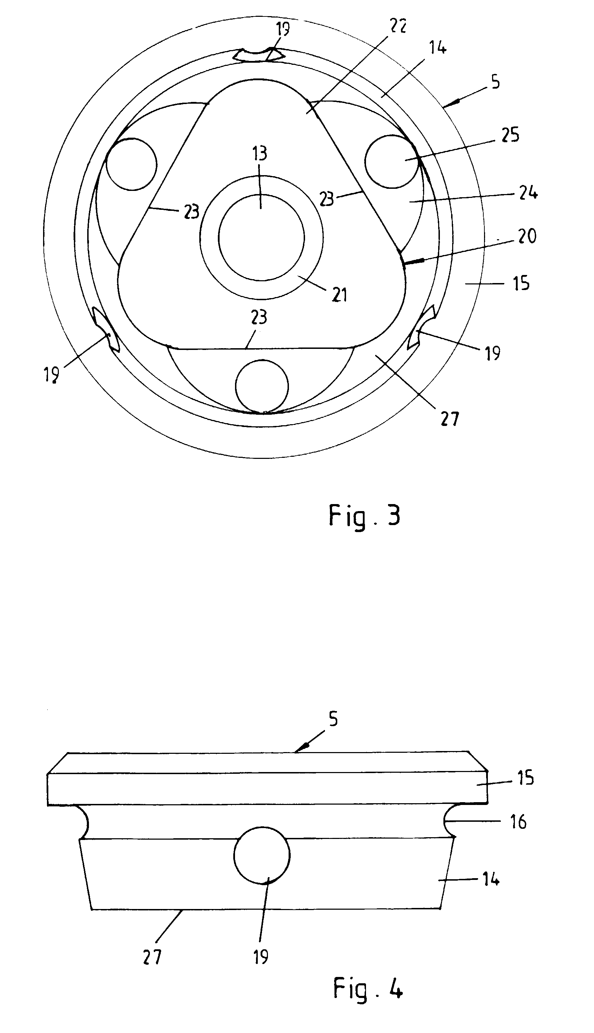

Bevorzugt sind drei Kugeln 18 symmetrisch in der Ringwand 14 verteilt angeordnet. Sie dienen zum Festlegen des Adapterelementes 6 in dem Innenraum 20. Dabei ist insbesondere in Fig. 3 erkennbar, daß der Muldengrund 12 des Innenraums 20 abgestuft ausgebildet ist. An seiner tiefsten Stelle ist die Bohrung 13 mit einer Fase 21 erkennbar. Daran schließt sich ein dreiecksförmiger Aufnahmeraum 22 an, in dem das in Fig. 5 gezeigte, ähnlich ausgestaltete Adapterelement 6 eingesetzt wird. Hierbei zeigen die Ecken des Dreiecks etwa in Richtung auf jeweils ein Aufnahmeloch 19 bzw. eine Kugel 18.

Durch Absätze 23 von diesem dreiecksförigen Aufnahmeraum 22 getrennt schließen kreisteilartig ausgebildete Podeste 24 an, welche Kugelmulden 25 aufweisen. In jede Kugelmulde 25 wird eine Kugel 26 eingesetzt, wobei die Kugelmulde 25 so ausgebildet ist oder nach dem Einsetzen angeprägt wird, daß die Kugeln 26 nicht aus der jeweiligen Kugelmulde 25 herausfallen können.

Der gesamte Innenraum 20 des Tragkörpers 5 wird dann von einer entsprechend unregelmäßig ausgebildeten Randkante 27 der Ringwand 14 umfangen.

In den dreiecksförmigen Aufnahmeraum 22 wird ein in Fig. 5 gezeigtes dreiecksförmiges Einsatzelement 28 des Adapterelementes 6 eingesetzt. Dieses hat eine Oberfläche 29 und eine Unterkante 30, die vor allem in Fig. 1 gezeigt ist. Diese Unterkante 30 besitzt insbesondere zu den Ecken des dreieckförmigen Einsatzelementes 28 hin eine Schrägfläche 31, welche in Gebrauchslage von den Kugeln 18 untergriffen wird.

Einstückig mit dem Einsatzelement 28 verbunden ist ein Zwischenring 32, an den sich ein etwa dreiecksförmiges Zentrierelement 33 anschließt. Das dreiecksförmige Zentrierelement 33 ist ähnlich dem Einsatzelement 28 ausgebildet, jedoch um 60° gedreht. Hierdurch bilden sich Überstände 34 aus, wobei in jeden Überstand 34 eine Zentriermulde 35 eingeformt ist. Diese Zentriermulde 35 wirkt, wie später beschrieben, mit der jeweiligen Kugel 26 zusammen.

Dem dreiecksförmigen Zentrierelement 33 ist wiederum bevorzugt einstückig ein Hülsenabschitt 36 angeformt, dessen Außenumfang von einer Ringnut 37 belegt ist. Diese Ringnut 37 dient, wie in Fig. 2 gezeigt, der Aufnahme eines Sprengringes 38, über welchen das Vorspannelement 8, gegen das Zentrierelement 33 gepresst, festgelegt wird. Vor seiner Festlegung wird allerdings das Vorspannelement 8 in das Verschlußelement 7 eingesetzt, wobei es in dem als Rändelhülse ausgebildeten Verschlußelement 7 in einer Innenringnut 39 festgelegt ist.

Gem. Fig. 6 sind in das Vorspannelement 8 verschiedene Linien 40 durch Stanzen, Laserschneiden, Ätzen od.dgl. eingeformt, durch welche einzelne, federnd wirkende Bereiche in dem Vorspannelement 8 gebildet werden. Dabei verlaufen diese Linien so, daß keine direkte, radiale Verbindung zwischen einem Aussenrand und einem Innenrand dieses Vorspannelementes hergestellt ist. Dadurch wird bewirkt, daß sich bei Betätigung des Vorspannelementes zwar die federnden Bereiche verziehen, sich aber weder Aussennoch Innendurchmesser des als Scheibenfeder ausgebildeten Vorspannelementes verändern. Hierdurch bleibt es mit dem Verschluß- bzw. dem Adapterelement verbunden.

Schlußendlich ist der Taststift 3 über einen Gewindeabschnitt 41 in eine entsprechende Gewindebohrung 42 in dem Adapterlement 6 eingeschraubt.

Die Funktionsweise der erfindungsgemäßen Präzisions-Kupplung R ist folgende:

Sie besteht nach dem Zusammenbau der einzelnen Elemente aus zwei Teilen. Ein Teil wird durch den Tragkörper 5 gebildet, der gegebenenfalls noch mit dem Anschlußzapfen 1 mittels der o.g. Schraube 9 verbunden ist.

Der zweite, vom ersten Teil lösbare Teil der Präzisions-Kupplungs R besteht aus dem Adapterelement 6, dem Verschlußelement 7 mit Scheibenfeder 8 und dem Taststift 3.

Dabei ist der Taststift 3 mittels des Gewindeabschnittes 41 in die Gewindebohrung 42 des Hülsenabschnitts 36 eingeschraubt und die Scheibenfeder 8 über den Sprengring 38 an dem Hülsenabschnitt 36 festgelegt.

Nunmehr wird das Adapterelement 6 in den Tragkörper 5 eingesetzt, wobei das dreiecksförmige Einsatzelement 28 in den dreiecksförmigen Aufnahmeraum 22 eingedrückt wird. Die Kugeln 18 weichen dabei nach außen in ihren Aufnahmelöchern 19 aus, wobei sie jedoch durch den O-Ring 17 gegen ein Herausfallen gesichert sind. Wesentlich ist hier auch, daß das dreiecksförmige Einsatzelement 28 bzw. die o.g. Schrägfläche 31 im Verhältnis zum Verschlußelement 7 bzw. einer in dem Verschlußelement vorgesehenen Innenschrägfläche 43 so angeordnet ist, daß die Schrägfläche 31 sich bereits über dem Kugelmittelpunkt befindet, wenn die Innenschrägfläche 43 die Kugeln 18 angreift. Dieser Zeitpunkt wird noch dadurch verzögert, daß, wie in Fig. 2 gezeigt, das Verschlußelement 7 gegen den Druck des Vorspannelements 8 zurückgehalten wird. Folgt das Verschlußelement 7 dann dem Druck des Vorspannelements 8, so drückt es mit der Innenschrägfläche 43 die Kugeln 18 nach innen, so daß diese die Schrägfläche 31 des Einsatzelementes 28 untergreifen und so das Adapterelement 6 festlegen. Gleichzeitig erfolgt ein Eintauchen des Zentrierelementes 33 in den Innenraum 20 im Bereich der Podeste 24, wobei die Kugeln 26 in die Kugelmulden 25 einfahren. Hierdurch erfolgt eine exakte Zentrierung des gesamten Adapterelementes 6.

Zum Entfernen des Adapterelementes 6 und der mit ihm verbundenen Einzelteile wird einfach das Verschlußelement 7 beispielsweise mit zwei Fingern nach unten geschoben, so daß die Kugeln 18 wieder freigegeben werden bzw. sich der Abstand zwischen der Schrägfläche 31 und der Innenschrägfläche 43 vergrößert. Damit können die Kugeln 18 nach außen nachgeben und das Einsatzelement 28 freigeben. Somit genügt zum Einsetzen oder Lösen des Adapterelementes lediglich eine Hand.

## Patentansprüche

1. Präzisions-Kupplung zum Einsatz in einem Tastkopf einer Meßeinrichtung, bei der ein Taststift (3) über ein Adapterteil (2) lösbar mit einem Anschlußzapfen (1) verbunden ist, das Adapterteil (2) einen Tragkörper (5) aufweist, welcher einen Innenraum (20) zur Aufnahme eines Adapterelementes (6) ausbildet, der Tragkörper (5) mit dem Anschlußzapfen (1) und das Adapterelement (6) mit dem Taststift (3) verbunden ist, wobei der Innenraum (20) von einer Ringwand (14) umfangen ist, in welcher eine Lagefixierung zum Festlegen des Adapterelements (6) vorgesehen ist, die als zumindest eine Kugel (18, 26) ausgebildet ist, welche in einem Aufnahmeloch (19) in der Ringwand (14) lagert, und wobei das Adapterelement (6) eine Zentriereinrichtung (33) aufweist,
dadurch gekennzeichnet,
daß die Ringwand (14) von einem Verschlußelement (7) umfangen ist, welches mit einer Wirkfläche die Kugel (18, 26) in das Aufnahmeloch (19) in der Ringwand (14) drückt und gegen die Kraft eines Vorspannelements (8) verschiebbar an dem Adapterelement (6) angeordnet ist.

2. Präzisions-Kupplung nach Anspruch 1, dadurch gekennzeichnet, daß die Kugel (18, 26) nach außen gegen ein Herausfallen durch einen O-Ring (17), eine Prägung od.dgl. gesichert ist, wobei der O-Ring (17) in einer Ringmulde (16) liegt und teilweise in die lichte Weite des Aufnahmeloches (19) einragt.

3. Präzisions-Kupplung nach Anspruch 2, dadurch gekennzeichnet, daß der Durchmesser (dl) des Aufnahmeloches (19) zum Innenraum (20) hin kleiner ist als der Durchmesser (d2) zur äußeren Kontur der Ringwand (14) hin und auch kleiner als der Durchmesser der Kugel (18, 26).

4. Präzisions-Kupplung nach einem der Ansprüche 1 bis 3, dadurch gekennzeichnet, daß das Vorspannelement (8) als Scheibenfeder ausgebildet und mit dem Verschlußelement (7) verbunden ist.

5. Präzisions-Kupplung nach Anspruch 4, dadurch gekennzeichnet, daß in die Scheibenfeder (8) Linien (40) zur Ausbildung von federnden Abschnitten eingebracht sind, welche zwecks Beibehaltung des Aussen- und Innendurchmessers der Scheibenfeder (8) eine radiale Verbindung von Aussenbereich und Innenbereich der Scheibenfeder unterbrechen.

6. Präzisions-Kupplung nach wenigstens einem der Ansprüche 1 bis 5, dadurch gekennzeichnet, daß das Adapterelement (6) zumindest ein Einsatzelement (28) aufweist, welches mit Kugeln (18) zusammenwirkt.

7. Präzisions-Kupplung nach Anspruch 6, dadurch gekennzeichnet, daß das Einsatzelement (28) eine Wirkflächen, bevorzugt eine Schrägfläche (31) aufweist, welche von den Kugeln (18, 26) untergriffen ist.

8. Präzisions-Kupplung nach Anspruch 7, dadurch gekennzeichnet, daß die Schrägflächen (31) oberhalb der Innenschrägflächen (43) des Verschlußelements (7) angeordnet sind.

9. Präzisions-Kupplung nach einem der Ansprüche 6 bis 8, dadurch gekennzeichnet, daß das Einsatzelement (28) mehreckig, bevorzugt dreicksförmig ausgebildet ist und in einem entsprechend geformten Aufnahmeraum (22) in dem Innenraum (20) sitzt, wobei sich die Kugeln (18, 26) etwa in den Ecken des Dreiecks befinden.

10. Präzisions-Kupplung nach wenigstens einem der Ansprüche 1 bis 9, dadurch gekennzeichnet, daß das Zentrierelement (33) mit Kugeln (18, 26) in dem Innenraum (20) zusammenwirkt.

11. Präzisions-Kupplung nach Anspruch 10, dadurch gekennzeichnet, daß das Zentrierelement (33) Zentriermulden (35) zur Aufnahme der Kugeln (18, 26) aufweist.

12. Präzisions-Kupplung nach Anspruch 10 oder 11, dadurch gekennzeichnet, daß das Zentrierelement (33) mehreckig, bevorzugt etwa dreiecksförmig ausgebildet und gegenüber dem Einsatzelement (28) um etwa 60° gedreht angeordnet ist, während die Kugeln (18, 26) sich auf Podesten (24) zwischen den als Lagefixierung dienenden Kugeln (18, 26) befinden.

13. Präzisions-Kupplung nach wenigstens einem der Ansprüche 6 bis 12, dadurch gekennzeichnet, daß Einsatzelement (28), Zentrierelement (33), Hülsenabschnitt (36) und gegebenenfalls ein Zwischenring (32) zwischen Einsatzelement (28) und Zentrierelement (33) einstückig ausgebildet sind.

## Claims

1. Precision coupling for use in a sensing head of a measuring device, wherein a sensing pin (3) is detachably connected to a connecting journal (1) via an adapter member (2), the adapter member (2) comprises a carrier body (5) which provides an interior (20) for the accommodation of an adapter element (6), the carrier body (5) is connected to the connecting journal (1) and the adapter element (6) is connected to the sensing pin (3), the interior (20) being surrounded by an annular wall (14) in which a position fixing means is provided for securing the adapter element (6), said fixing means being configured as at least one ball (18, 26) which is mounted in a receiving hole (19) in the annular wall (14), and the adapter element (6) comprising a centring device (33), characterised in that the annular wall (14) is enclosed by a closure element (7) which, with one active face, urges the ball (18, 26) into the receiving hole (19) in the annular wall (14) and which is disposed on the adapter element (6) so as to be displaceable in opposition to the force of a pre-tensioning element (8).

2. Precision coupling according to claim 1, characterised in that the ball (18, 26) is prevented from falling outwardly by a ring (17), a projection or the like, the ring (17) lying in an annular recess (16) and partially protruding into the inside diameter of the receiving hole (19).

3. Precision coupling according to claim 2, characterised in that the diameter (dl) of the receiving hole (19) is smaller towards the interior (20) than the diameter (d2) towards the outer contour of the annular wall (14) and is also smaller than the diameter of the ball (18, 26).

4. Precision coupling according to one of claims 1 to 3. characterised in that the pre-clamping element (8) is configured as a spring washer and is connected to the closure element (7).

5. Precision coupling according to claim 4, characterised in that lines (40) are provided in the spring washer (8) to form resilient portions which interrupt a radial connection between the outer region and the inner region of the spring washer for the purpose of maintaining the outer and inner diameters of the spring washer (8).

6. Precision coupling according to at least one of claims 1 to 5, characterised in that the adapter element (6) has at least one insert element (28) which co-operates with balls (18).

7. Precision coupling according to claim 6, characterised in that the insert element (28) has an active face, preferably an inclined face (31), which is engaged from beneath by the balls (18, 26).

8. Precision coupling according to claim 7, characterised in that the inclined faces (31) are disposed above the inner inclined faces (43) of the closure element (7).

9. Precision coupling according to one of claims 6 to 8, characterised in that the insert element (28) has a polygonal, preferably triangular, configuration and sits in a correspondingly shaped receiving chamber (22) in the interior (20), the balls (18, 26) being situated substantially in the corners of the triangle.

10. Precision coupling according to at least one of claims 1 to 9, characterised in that the centring element (33) co-operates with balls (18, 26) in the interior (20).

11. Precision coupling according to claim 10, characterised in that the centring element (33) has centring recesses (35) for accommodating the balls (18, 26).

12. Precision coupling according to claim 10 or 11, characterised in that the centring element (33) has a polygonal, preferably a substantially triangular, configuration and is disposed rotated through approximately 60° relative to the insert element (28), while the balls (18, 26) are situated on platforms (24) between the balls (18, 26) serving as position fixing means.

13. Precision coupling according to at least one of claims 6 to 12, characterised in that insert element (28), centring element (33), sleeve portion (36) and possibly an intermediate ring (32) between insert element (28) and centring element (33) are integrally formed.

## Revendications

1. Embrayage de précision destiné à un palpeur d'une installation de mesure comportant une tige de détection (3) reliée de manière amovible à une broche de liaison (1) par une pièce adaptatrice (2), cette pièce adaptatrice (2) comportant un support (5) muni d'un volume intérieur (20) pour recevoir un élément adaptateur (6), relié par le support (5) à la broche de liaison (1) et dont l'élément adaptateur (6) est relié à la broche de palpeur (3), le volume intérieur (20) étant entouré par une paroi annulaire (14) dans laquelle est prévu un moyen de blocage de position pour bloquer l'élément adaptateur (6), ce moyen étant au moins réalisé sous la forme d'une bille (18, 26) qui vient dans un logement (19) de la paroi annulaire (14) et l'élément adaptateur (6) comporte une installation de centrage (33),
caractérisé en ce que
la paroi annulaire (14) est entourée par un élément de fermeture (7) qui pousse avec une surface active, la bille (18, 26) dans le logement (19) de la paroi annulaire (14) et est monté coulissant contre l'élément adaptateur (6) contre la force développée par l'élément de précontrainte (8).

2. Embrayage de précision selon la revendication 1,
caractérisé en ce que
la bille (18, 26) est protégée contre l'échappement vers l'extérieur par un joint torique (17), une partie matricée ou analogue, le joint torique (17) étant logé dans une gorge annulaire (16) et pénétrant en partie dans l'ouverture libre du logement (19).

3. Embrayage de précision selon la revendication 2,
caractérisé en ce que
le diamètre (dl) du logement (19) vers le volume intérieur (20) est inférieur au diamètre (d2) du contour extérieur de la paroi annulaire (14) et aussi inférieur au diamètre de la bille (18, 26).

4. Embrayage de précision selon l'une quelconque des revendications 1 à 3,
caractérisé en ce que
l'élément de précontrainte (8) est en forme de ressort Belleville relié à l'élément de verrouillage (7).

5. Embrayage de précision selon la revendication 4,
caractérisé par
des lignes (40) réalisées dans le ressort Belleville (8) pour former des segments élastiques qui, pour respecter le diamètre extérieur et le diamètre intérieur du ressort Belleville (8) comportent une liaison radiale entre la zone extérieure et la zone intérieure de la rondelle élastique.

6. Embrayage de précision selon au moins l'une des revendications 1 à 5,
caractérisé en ce que
l'élément adaptateur (6) comporte au moins un élément d'insert (28) coopérant avec les billes (18).

7. Embrayage de précision selon la revendication 6,
caractérisé en ce que
l'élément d'insert (28) comporte une surface active de préférence une surface inclinée (31) sous laquelle passe les billes (18, 26).

8. Embrayage de précision selon la revendication 7,
caractérisé en ce que
les surfaces inclinées (31) se trouvent au-dessus des surfaces inclinées intérieures (43) de l'élément de verrouillage (7).

9. Embrayage de précision selon l'une quelconque des revendications 6 à 8,
caractérisé en ce que
l'élément d'insert (28) est polygonal de préférence triangulaire et est logé dans une cavité (22) de forme correspondante dans le volume intérieur (20), les billes (18, 26) se trouvant sensiblement aux coins du triangle.

10. Embrayage de précision selon au moins l'une quelconque des revendications 1 à 9,
caractérisé en ce que
l'élément de centrage (33) coopère avec les billes (18, 26) dans le volume intérieur (20).

11. Embrayage de précision selon la revendication 10
caractérisé en ce que
l'élément de centrage (33) présente des goulottes de centrage (35) pour recevoir les billes (18, 26).

12. Embrayage de précision selon la revendication 10 ou 11
caractérisé en ce que
l'élément de centrage (33) est polygonal de préférence de forme triangulaire et est tourné par rapport à l'élément de garniture (28) d'environ 60°, les billes (18, 26) se trouvant sur des plateaux (24) entre les billes (18, 26) servant au blocage en position.

13. Embrayage de précision selon au moins l'une quelconque des revendications 6 à 12,
caractérisé en ce que
l'élément de garniture (28) fait corps avec l'élément de centrage (33), le segment de manchon (36) et le cas échéant une bague intermédiaire (32) entre l'élément d'insert (28) et l'élément de centrage (33).
